# EUROPEAN PATENT APPLICATION

(11) **EP 3 173 233 A1**
(43) Date of publication of application: **31.05.2017**
(21) Application number: 16197126.2
(22) Date of filing: 03.11.2016
(51) Int. Cl.: B33Y 30/00, B29C 67/00, B22F 3/105

(54) **THREE-DIMENSIONAL FABRICATING APPARATUS**

(30) Priority: 10.11.2015 JP 2015220447
(71) Applicant: Ricoh Company, Ltd., Tokyo 143-8555 (JP)
(72) Inventor: KUNIOKA, Satoshi, Tokyo, 143-8555 (JP)
(74) Representative: Leeming, John Gerard

(57) **Abstract**

A three-dimensional fabricating apparatus (1) includes a processing-space heater (7), a fabrication unit (10), a heat generator (12), a heat radiator (30), and a heat-transmission switching unit (100, 22, 23). The processing-space heater (7) heats a processing space. The heat generator (12) generates heat to heat a heating target in a fabrication process of fabricating a three-dimensional object with the fabrication unit (10). The heat-transmission switching unit (100, 22, 23) causes the heat generated in the heat generator (12) to be transmitted to the heat radiator (30) in a preheating process of heating the processing space to the target temperature. The heat-transmission switching unit (100, 22, 23) switches transmission of the heat from the heat generator (12) to the heat radiator (30) so that a transmission efficiency in transmitting the heat to the heat radiator (30) is lower in the fabrication process than in the preheating process.

## Description

### BACKGROUND

### Technical Field

Aspects of the present disclosure relate to a three-dimensional fabricating apparatus.

### Related Art

Three-dimensional fabricating apparatuses are known that fabricate solid objects (three-dimensional fabrication object) of desired three-dimensional shapes in pre-heated processing space.

For example, a three-dimensional fabricating apparatus fabricates a three-dimensional object according to fused deposition modeling (FDM) in a production chamber (processing space) heated by a heater. The three-dimensional fabricating apparatus moves an extrusion head (fabrication unit) in a two-dimensional direction along a horizontal plane in the production chamber while extruding a thermoplastic material (fabrication material) from the extrusion head, to sequentially laminate layered fabrication structures on a platform (mount table) to finally fabricate a three-dimensional object.

For a three-dimensional fabricating apparatus to fabricate a three-dimensional object in a heated processing space, typically, a preheating process is performed to heat the processing space to a desired temperature before a fabrication process is started. For a conventional three-dimensional fabricating apparatus, it takes a long time to perform the preheating process, thus hampering an early start of a first fabrication process.

### SUMMARY

In an aspect of the present disclosure, there is provided a three-dimensional fabricating apparatus that includes a processing-space heater, a fabrication unit, a heat generator, a heat radiator, and a heat-transmission switching unit. The processing-space heater heats a processing space to a target temperature. The fabrication unit fabricates a three-dimensional object in the processing space heated to the target temperature. The heat generator generates heat to heat a heating target in a fabrication process of fabricating the three-dimensional object with the fabrication unit. The heat radiator radiates heat in the processing space. The heat-transmission switching unit causes the heat generated in the heat generator to be transmitted to the heat radiator in a preheating process of heating the processing space to the target temperature. The heat-transmission switching unit switches transmission of the heat from the heat generator to the heat radiator so that a transmission efficiency in transmitting the heat generated in the heat generator to the heat radiator is lower in the fabrication process than in the preheating process.

According to at least one embodiment of the present disclosure, the time of a preheating process to heat a processing space before the start of a fabrication process can be reduced, thus allowing an early start of a first fabrication process.

### BRIEF DESCRIPTION OF THE SEVERAL VIEWS OF THE DRAWINGS

The aforementioned and other aspects, features, and advantages of the present disclosure would be better understood by reference to the following detailed description when considered in connection with the accompanying drawings, wherein:
FIG. 1 is an illustration of a configuration of a three-dimensional fabricating apparatus according to an embodiment of the present disclosure;
FIG. 2 is an outer perspective view of a chamber disposed in the three-dimensional fabricating apparatus;
FIG. 3 is a perspective view of the three-dimensional fabricating apparatus in a state in which a front portion of the three-dimensional fabricating apparatus is cut and removed;
FIG. 4 is a block diagram of control of the three-dimensional fabricating apparatus;
FIG. 5 is a perspective view of the inside of a chamber in the three-dimensional fabricating apparatus;
FIG. 6 is an enlarged perspective view of a contact portion of a front end portion of a fabrication head with a head contact portion of a heat radiation member in the chamber;
FIG. 7 is an enlarged top view of the contact portion of FIG. 6;
FIG. 8A is a side view of the inside of the chamber of the three-dimensional fabricating apparatus in a state in which the fabrication head is placed at a home position and a stage is placed at a lowest point;
FIG. 8B is a side view of the inside of the chamber of the three-dimensional fabricating apparatus in a state in which the fabrication head is placed away from the home position and the stage is placed at the lowest point;
FIG. 8C is a side view of the inside of the chamber of the three-dimensional fabricating apparatus in a state in which the fabrication head is placed away from the home position and the stage is placed away from the lowest point;
FIG. 9A is an enlarged perspective view of a state in which the fabrication head is placed at the home position and the fabrication head and a heat radiation member are in contact with each other;
FIG. 9B is an enlarged perspective view of a state in which the fabrication head is placed away from the home position and the fabrication head is placed away from the heat radiation member; and
FIG. 9C is an enlarged perspective view of a state in which the stage is placed away from the lowest point and is separated from the heat radiation member.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Below, a three-dimensional fabricating apparatus according to an embodiment of the present disclosure, is described that fabricates a three-dimensional object according to fused deposition modeling (FDM). Note that embodiments of the present disclosure are not limited to fused deposition modeling (FDM) and are applicable to a three-dimensional fabricating apparatus that fabricates a three-dimensional object according to any other fabrication method that fabricates a three-dimensional object in a heater chamber.

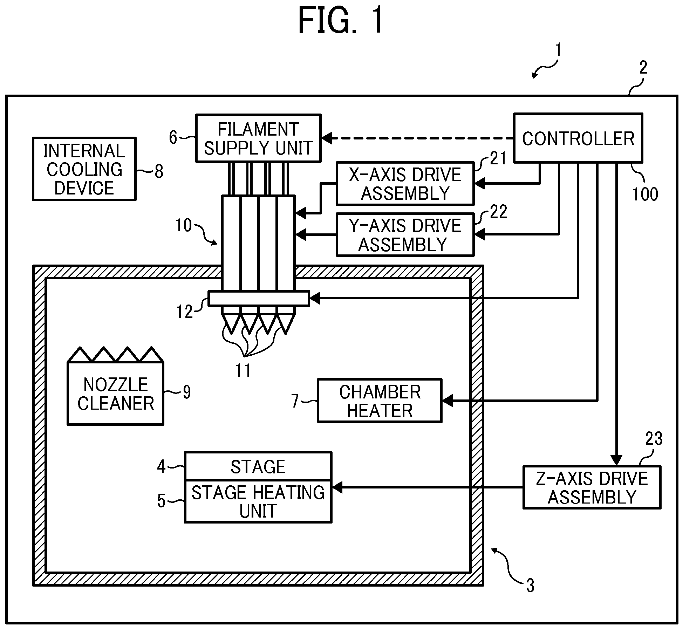

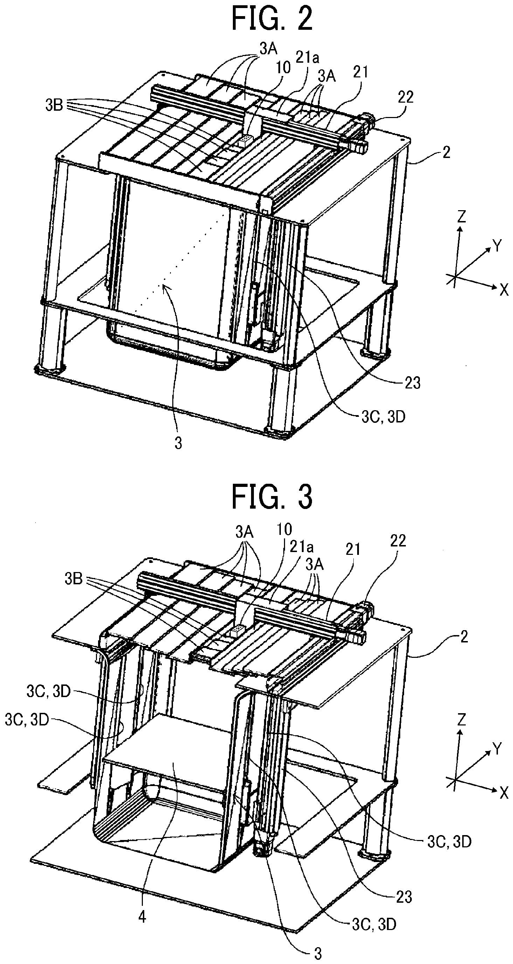

FIG. 1 is an illustration of a configuration of a three-dimensional fabricating apparatus 1 according to an embodiment of the present disclosure. FIG. 2 is an outer perspective view of a chamber disposed in the three-dimensional fabricating apparatus 1 according to the present embodiment. FIG. 3 is a perspective view of the three-dimensional fabricating apparatus 1 in a state in which a front portion of the three-dimensional fabricating apparatus 1 is cut and removed.

The three-dimensional fabricating apparatus 1 includes a chamber 3 in a body frame 2. The interior of the chamber 3 is a processing space to fabricate a three-dimensional object. A stage 4 as a mount table is disposed in the processing space, that is, the chamber 3. The three-dimensional object is fabricated on the stage 4.

A fabrication head 10 as a fabrication unit is disposed above the stage 4 in the chamber 3. The fabrication head 10 includes ejection nozzles 11 at a lower side, to eject filaments as fabrication materials. In the present embodiment, four ejection nozzles 11 are disposed on the fabrication head 10. However, the number of the ejection nozzles 11 is not limited to four and may be any other suitable number. The fabrication head 10 has a head heating unit 12 being a fabrication-material heater as a heat generator to heat filaments supplied to the ejection nozzles 11.

Filaments have a shape of long wire and are set to the three-dimensional fabricating apparatus 1 in reeled state. A filament supply unit 6 supplies the filaments to the ejection nozzles 11 on the fabrication head 10. Note that the filaments may be different from each other or the same between the ejection nozzles 11. In the present embodiment, the filaments supplied by the filament supply unit 6 is heated and melted by the head heating unit 12, and the melted filaments are extruded and ejected from the ejection nozzles 11. Thus, layered fabrication structures are sequentially laminated to fabricate a three-dimensional object.

Note that, instead of the filaments being fabrication materials, a support material not constituting a resultant three-dimensional object may be supplied from the ejection nozzles 11 on the fabrication head 10. The support material is made of a material different from the filaments being fabrication materials, and is finally removed from the three-dimensional object made of the filaments. The support material is heated and melted by the head heating unit 12. The melted support material is extruded and ejected from a predetermined ejection nozzle(s) of the ejection nozzles 11, and sequentially laminated in layers.

The fabrication head 10 is movably held to an X-axis drive assembly 21 extending in a left-and-right direction (a left-and-right direction, that is, an X-axis direction in FIGS. 2 and 3) of the three-dimensional fabricating apparatus 1 via a connector 21a. The fabrication head 10 is movable along a longitudinal direction of the X-axis drive assembly 21 (the X-axis direction in FIGS. 2 and 3). The fabrication head 10 is movable in the left-and-right direction (the X-axis direction) of the three-dimensional fabricating apparatus 1 by a drive force of the X-axis drive assembly 21. Since the fabrication head 10 is heated to high temperature by the head heating unit 12, the connector 21a preferably has low heat conductivity to reduce transmission of heat from the fabrication head 10 to the X-axis drive assembly 21.

Opposed ends of the X-axis drive assembly 21 are movably held to a Y-axis drive assembly 22 extending in a front-and-rear direction (a front-and-rear direction, that is, a Y-axis direction in FIGS. 2 and 3) of the three-dimensional fabricating apparatus 1. The opposed ends of the X-axis drive assembly 21 are slidable along a longitudinal direction of the Y-axis drive assembly 22 (the Y-axis direction in FIGS. 2 and 3). The X-axis drive assembly 21 moves along the Y-axis direction by a drive force of the Y-axis drive assembly 22, thus allowing the fabrication head 10 to move along the Y-axis direction.

The stage 4 is secured to the body frame 2 and movably held to a Z-axis drive assembly 23 extending in an up-and-down direction (an up-and-down direction, that is, a Z-axis direction in FIGS. 2 and 3) of the three-dimensional fabricating apparatus 1. The stage 4 is movable along a longitudinal direction of the Z-axis drive assembly 23 (the Z-axis direction in FIGS. 2 and 3). The stage 4 is movable along the up-and-down direction of the three-dimensional fabricating apparatus 1 (the Z-axis direction in FIGS. 2 and 3).

In the present embodiment, a chamber heater 7 as a processing space heater to heat the interior of the chamber 3 is disposed in the chamber 3 (the processing space). In the present embodiment, since a three-dimensional object is fabricated by fused deposition modeling (FDM), a fabrication process is preferably performed in a state in which the internal temperature of the chamber 3 is maintained at a target temperature. Accordingly, in the present embodiment, before starting the fabrication process, a preheating process is performed to preliminarily raise the internal temperature of the chamber 3 to the target temperature. In the preheating process, the chamber heater 7 heats the interior of the chamber 3 to raise the internal temperature of the chamber 3 to the target temperature. In the fabrication process, the chamber heater 7 heats the interior of the chamber 3 to maintain the internal temperature of the chamber 3 at the target temperature. A controller 100 controls operation of the chamber heater 7.

The chamber 3 is made of thermal-insulation materials or a member including a heat insulator, and has a configuration of reducing heat escaping from the inside of the chamber 3 to the outside. In particular, for the present embodiment, the X-axis drive assembly 21, the Y-axis drive assembly 22, and the Z-axis drive assembly 23 are disposed outside the chamber 3. Such a configuration prevents the X-axis drive assembly 21, the Y-axis drive assembly 22, and the Z-axis drive assembly 23 from being exposed to high temperature, thus allowing stable drive control.

In the present embodiment, the drive target of the X-axis drive assembly 21 and the Y-axis drive assembly 22 is the fabrication head 10, and a portion of the fabrication head 10 (a front end portion of the fabrication head 10 including the ejection nozzles 11) is disposed in the chamber 3. In the present embodiment, even if the fabrication head 10 moves in the X-axis direction, the inside of the chamber 3 is shielded from the outside. For example, on an upper face of the chamber 3, as illustrated in FIG. 2 and FIG. 3, a plurality of X-axis slide insulators 3A longer in the Y-axis direction is arrayed in the X-axis direction. Adjacent ones of the X-axis slide insulators 3A are relatively slidable along the X-axis direction. With such a configuration, even when the fabrication head 10 is moved along the X-axis direction by the X-axis drive assembly 21, the X-axis slide insulators 3A slide along the X-axis direction and the upper face of the chamber 3 is constantly covered with the X-axis slide insulators 3A.

At an upper face portion through which the fabrication head 10 penetrates, as illustrated in FIG. 2 and FIG. 3, a plurality of Y-axis slide insulators 3B is arrayed in the Y-axis direction. Adjacent ones of the Y-axis slide insulators 3B are relatively slidable along the Y-axis direction. With such a configuration, even when the fabrication head 10 on the X-axis drive assembly 21 is moved along the Y-axis direction by the Y-axis drive assembly 22, the Y-axis slide insulators 3B slide along the Y-axis direction and the upper face of the chamber 3 is constantly covered with the Y-axis slide insulators 3B.

The drive target of the Z-axis drive assembly 23 is the stage 4, and the drive target is disposed in the chamber 3. In the present embodiment, even if the stage 4 moves in the Z-axis direction, the inside of the chamber 3 is shielded from the outside. For example, as illustrated in FIG. 2 and FIG. 3, outer wall faces of the chamber 3 have slide holes 3C extending in the Z-axis direction. Connecting portions of the Z-axis drive assembly 23 and the stage 4 penetrate through the slide holes 3C. The slide holes 3C are sealed with flexible seals 3D made of thermal-insulation material. When the stage 4 is moved in the Z-axis direction by the Z-axis drive assembly 23, the connecting portions of the Z-axis drive assembly 23 and the stage 4 move in the Z-axis direction along the slide holes 3C while elastically deforming the flexible seals 3D. Accordingly, the slide holes 3C formed at lateral side faces of the chamber 3 are constantly covered with the seals 3D.

In the present embodiment, the three-dimensional fabricating apparatus 1 further includes, e.g., an internal cooling device 8 to cool an internal space of the three-dimensional fabricating apparatus 1 outside the chamber 3 and a nozzle cleaner 9 to clean the ejection nozzles 11 of the fabrication head 10.

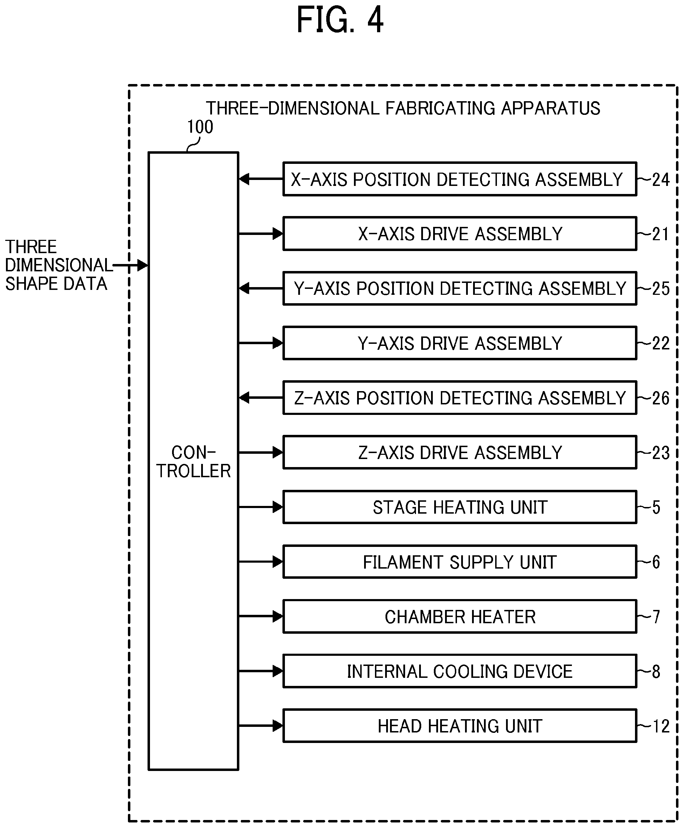

FIG. 4 is a block diagram of control of the three-dimensional fabricating apparatus according to the present embodiment. In the present embodiment, the three-dimensional fabricating apparatus 1 includes an X-axis position detecting assembly 24 to detect the position of the fabrication head 10 in the X-axis direction. Detection results of the X-axis position detecting assembly 24 are transmitted to the controller 100. The controller 100 controls the X-axis drive assembly 21 according to the detection results to move the fabrication head 10 to a target position in the X-axis direction.

In the present embodiment, the three-dimensional fabricating apparatus 1 further includes a Y-axis position detecting assembly 25 to detect the position of the X-axis drive assembly 21 in the Y-axis direction (the position of the fabrication head 10 in the Y-axis direction). Detection results of the Y-axis position detecting assembly 25 are transmitted to the controller 100. The controller 100 controls the Y-axis drive assembly 22 according to the detection results to move the fabrication head 10 on the X-axis drive assembly 21 to a target position in the Y-axis direction.

In the present embodiment, the three-dimensional fabricating apparatus 1 includes a Z-axis position detecting assembly 26 to detect the position of the stage 4 in the Z-axis direction. Detection results of the Z-axis position detecting assembly 26 are transmitted to the controller 100. The controller 100 controls the Z-axis drive assembly 23 according to the detection results to move the stage 4 to a target position in the Z-axis direction.

As described above, the controller 100 controls movement of the fabrication head 10 and the stage 4 to set the three-dimensionally relative positions of the fabrication head 10 and the stage 4 in the chamber 3 to three-dimensional target positions.

In the present embodiment, since a three-dimensional object is fabricated by fused deposition modeling (FDM), as described above, the fabrication process is preferably performed in a state in which the internal temperature of the chamber 3 is maintained at a target temperature. Accordingly, in the present embodiment, before starting the fabrication process, a preheating process is performed to preliminarily raise the internal temperature of the chamber 3 to the target temperature. In the preheating process, the controller 100 activates the chamber heater 7 to raise the internal temperature of the chamber 3. However, only with the chamber heater 7, it may take a long time to preliminarily heat the interior of the chamber 3, which may hamper quick start of a first fabrication process.

Hence, in the present embodiment, the controller 100 activates not only the chamber heater 7 but also the head heating unit 12 in the preheating process. For example, at the start of the preheating process, the controller 100 starts operation of the head heating unit 12 as well as the chamber heater 7. As described above, the head heating unit 12 is disposed at the front end portion of the fabrication head 10 inside the chamber 3. Accordingly, when the head heating unit 12 is activated, heat of the head heating unit 12 is radiated from the front end portion of the fabrication head 10 to the interior of the chamber 3. Accordingly, the amount of heat per unit time supplied to the interior of the chamber 3 is greater than when the preheating process is performed with only the chamber heater 7. The speed of increasing the internal temperature of the chamber 3 increases, thus allowing a reduction in the time for the preheating process to heat the interior of the chamber 3 to the target temperature.

However, since the surface area of the front end portion of the fabrication head 10 disposed inside the chamber 3 (the area in which the front end portion contacts air in the chamber 3) is small, activating only the head heating unit 12 may not sufficiently reduce the time of the preheating process. Hence, in the present embodiment, a heat radiation member 30 as heat radiator is disposed in the chamber 3, to effectively radiate heat of the head heating unit 12 to the interior of the chamber 3.

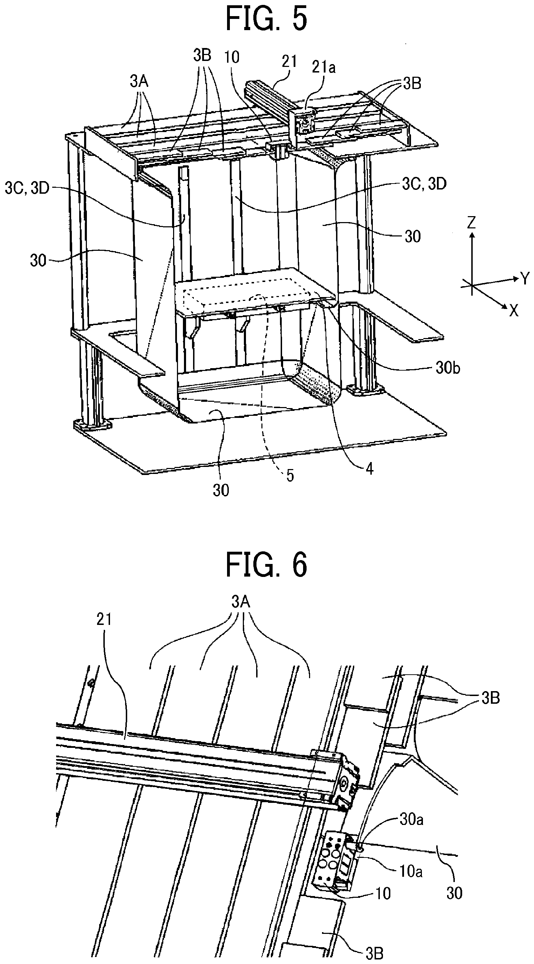

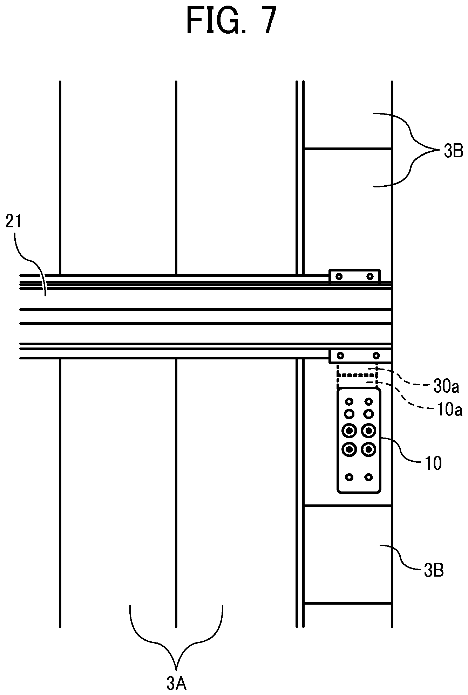

FIG. 5 is a perspective view of the inside of the chamber 3 in the present embodiment. FIG. 6 is an enlarged perspective view of a contact portion of a front end portion 10a of the fabrication head 10 with a head contact portion 30a of the heat radiation member 30 in the chamber 3. FIG. 7 is an enlarged top view of the contact portion of FIG. 6.

For the present embodiment, in the chamber 3, the heat radiation member 30 of a shape of thin plate is disposed along both side faces opposed each other in the Y-axis direction and a bottom face of the chamber 3. In the present embodiment, the heat radiation member 30 is a single continuous member. Alternatively, in some embodiments, the heat radiation member may be formed of a plurality of members disposed away from each other. In the present embodiment, as illustrated in FIG. 6 and FIG. 7, the heat radiation member 30 includes the head contact portion 30a to contact the front end portion 10a of the fabrication head 10 when the fabrication head 10 is positioned at a predetermined standby position (home position) in the X-axis direction and the Y-axis direction. Accordingly, in the present embodiment, placing the fabrication head 10 at the home position allows heat generated in the head heating unit 12 to be transferred from the front end portion 10a of the fabrication head 10 to the heat radiation member 30 via the head contact portion 30a.

For example, when the preheating process starts, the fabrication head 10 is placed at the home position. If the fabrication head 10 is not placed at the home position, the controller 100 controls the X-axis drive assembly 21 and the Y-axis drive assembly 22 to place the fabrication head 10 at the home position. The controller 100 turns on energization of the chamber heater 7 to activate the chamber heater 7. Accordingly, the chamber 3 is heated by heat generated in the chamber heater 7 and the internal temperature of the chamber 3 is raised.

The controller 100 turns on energization of the head heating unit 12 to activate the head heating unit 12. Accordingly, heat generated in the head heating unit 12 heats the front end portion 10a of the fabrication head 10, and heat of the front end portion 10a is radiated to the interior of the chamber 3. Thus, the interior of the chamber 3 is heated and the internal temperature of the chamber 3 is raised. Heat generated in the head heating unit 12 heats the front end portion 10a of the fabrication head 10 and is also transferred to the heat radiation member 30 contacting the front end portion 10a, thus heating the heat radiation member 30. Accordingly, heat of the front end portion 10a of the fabrication head 10 is radiated from not only the surface of the front end portion 10a but also the surface of the heat radiation member 30 to heat the interior of the chamber 3, thus raising the internal temperature of the chamber 3. As a result, the surface area from which heat of the front end portion 10a heated by the head heating unit 12 is radiated to the interior of the chamber 3 is significantly increased. Heat of the head heating unit 12 is effectively transferred in the chamber 3, thus allowing the internal temperature of the chamber 3 to be promptly raised.

After the internal temperature of the chamber 3 is raised to the target temperature by the preheating process, the process shifts to the fabrication process. In the fabrication process, if heat of the head heating unit 12 is transmitted to the heat radiation member 30 and utilized to heat the interior of the chamber 3, the temperature of the filaments or the support material, which are heating target to be heated by the head heating unit 12 in the fabrication process, might not be sufficiently raised.

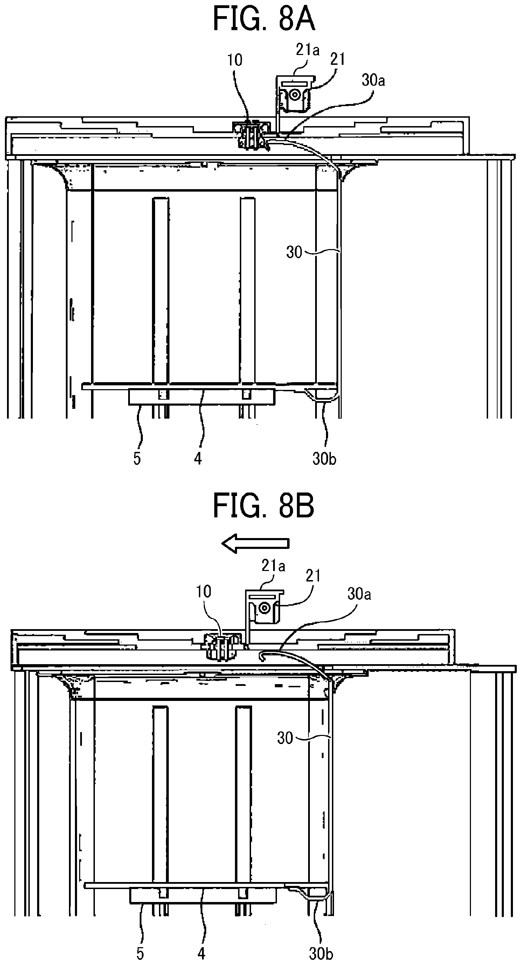

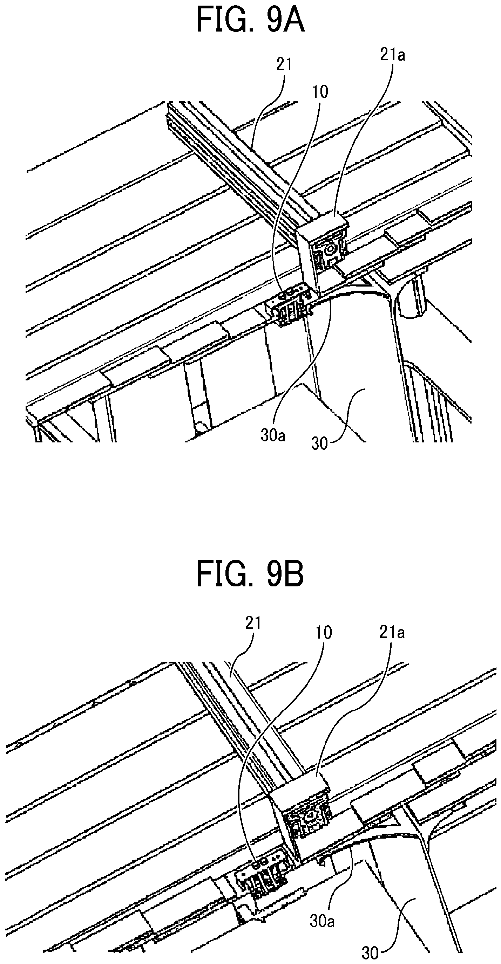

Hence, in the present embodiment, the controller 100 being a control circuit acts as a heat-transmission switching unit to switch heat transmission from the head heating unit 12 to the heat radiation member 30 so that, in the fabrication process, the transmission efficiency in transmitting heat generated in the head heating unit 12 to the heat radiation member 30 is lower than in the preheating process. The controller 100 controls the Y-axis drive assembly 22 to move the fabrication head 10 from the home position illustrated in FIG. 8A and FIG. 9A to a non-home position illustrated in FIG. 8B and FIG. 9B. Accordingly, in the preheating process, the fabrication head 10 is placed at the home position (transmission position). The front end portion 10a of the fabrication head 10 contacts the head contact portion 30a of the heat radiation member 30. Heat generated in the head heating unit 12 is transmitted to the heat radiation member 30 via a contact portion of the front end portion 10a of the fabrication head 10 and the head contact portion 30a of the heat radiation member 30. By contrast, in the fabrication process, the fabrication head 10 is placed at the non-home position (non-transmission position). The front end portion 10a of the fabrication head 10 is disposed away from the head contact portion 30a of the heat radiation member 30. The fabrication head 10 and the heat radiation member 30 are not in contact with each other. Such a configuration prevents heat generated in the head heating unit 12 from being directly transmitted to the heat radiation member 30. Accordingly, the transmission efficiency in transmitting heat generated in the head heating unit 12 to the heat radiation member 30 is lower in the fabrication process than in the preheating process. As a result, in the fabrication process, heat of the head heating unit 12 is less likely to be absorbed by the heat radiation member 30, thus allowing the temperature of the filaments or the support material being heating target to be sufficiently raised.

In the present embodiment, a stage heating unit 5 is disposed to heat the stage 4. The stage heating unit 5 is also used as a heat generator and utilized for the preheating process to preliminarily heat the interior of the chamber 3. For example, as illustrated in FIG. 8A and FIG. 9A, the heat radiation member 30 in the present embodiment includes a stage contact portion 30b to contact the stage 4 when the position of the stage 4 in the Z-axis direction is positioned to a predetermined standby position (e.g., a lowest point in the present embodiment). Accordingly, in the present embodiment, placing the stage 4 at the lowest point (a most distant position from the fabrication head 10) allows heat generated in the stage heating unit 5 to be transmitted from the stage 4 to the heat radiation member 30 via the stage contact portion 30b.

For example, when the preheating process starts, the stage 4 is placed at the lowest point. If the stage 4 is not placed at the lowest point, the controller 100 controls the Z-axis drive assembly 23 to place the stage 4 at the lowest point. Then, the controller 100 turns on energization of not only the chamber heater 7 and the head heating unit 12 but also the stage heating unit 5 to activate the chamber heater 7, the head heating unit 12, and the stage heating unit 5.

Accordingly, heat generated in the stage heating unit 5 heats the stage 4, and heat of the stage 4 is radiated to the interior of the chamber 3. Thus, the interior of the chamber 3 is heated and the internal temperature of the chamber 3 is raised. Heat generated in the stage heating unit 5 heats the stage 4 and is also transmitted to the heat radiation member 30 contacting the stage 4. Thus, the heat radiation member 30 is heated. Accordingly, heat of the stage 4 is radiated to the interior of the chamber 3 from not only the surface of the stage 4 but also the surface of the heat radiation member 30. The interior of the chamber 3 is heated and the internal temperature of the chamber 3 is raised. As a result, the surface area from which heat of the stage 4 heated by the stage heating unit 5 is radiated to the interior of the chamber 3 is significantly increased. Heat of the stage heating unit 5 is effectively transferred to the interior of the chamber 3, thus allowing the internal temperature of the chamber 3 to be promptly raised.

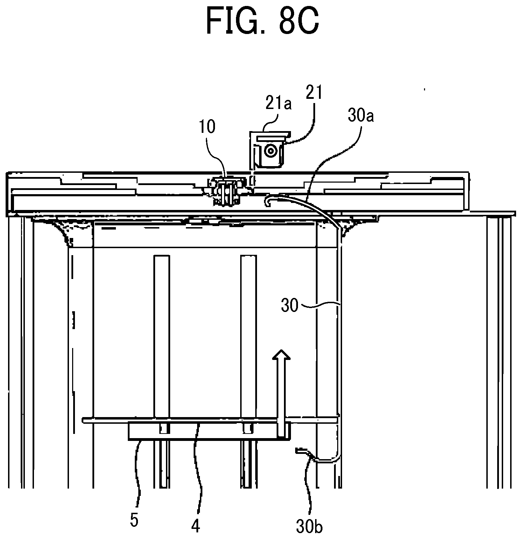

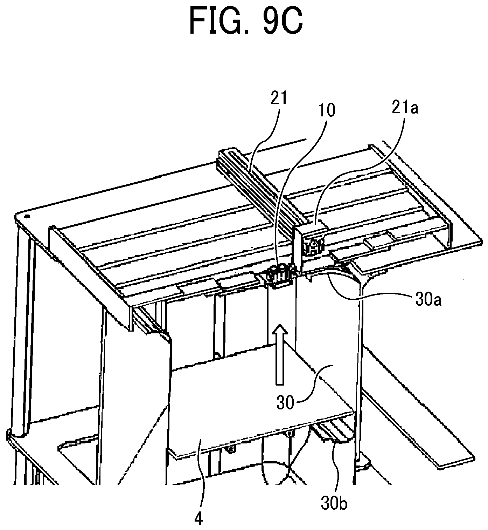

In the fabrication process, if heat of the stage heating unit 5 is transmitted to the heat radiation member 30 and utilized to heat the interior of the chamber 3, the temperature of the stage 4, which is a heating target to be heated by the stage heating unit 5 in the fabrication process, might not be sufficiently raised. Hence, in the present embodiment, the controller 100 acts as the heat-transmission switching unit to switch heat transmission from the stage heating unit 5 to the heat radiation member 30 so that, in the fabrication process, the transmission efficiency in transmitting heat generated in the stage heating unit 5 to the heat radiation member 30 is lower than in the preheating process. The controller 100 controls the Z-axis drive assembly 23 to move the stage 4 from the lowest point illustrated in FIG. 8A and FIG. 9A to a non-lowest point illustrated in FIG. 8C and FIG. 9C. Accordingly, in the preheating process, the stage 4 is placed at the lowest point (transmission position) and contacts the stage contact portion 30b of the heat radiation member 30. Heat generated in the stage heating unit 5 is transmitted to the heat radiation member 30 via a contact portion of the stage 4 and the stage contact portion 30b of the heat radiation member 30. By contrast, the fabrication process, the stage 4 is placed at the non-lowest point (non-transmission position). The stage 4 is disposed away from the stage contact portion 30b of the stage contact portion 30b, so that the stage 4 and the heat radiation member 30 are not in contact with each other. Such a configuration prevents heat generated in the stage heating unit 5 from being directly transmitted to the heat radiation member 30. Accordingly, the transmission efficiency in transmitting heat generated in the stage heating unit 5 to the heat radiation member 30 is lower in the fabrication process than in the preheating process. As a result, in the fabrication process, heat of the stage heating unit 5 is less likely to be absorbed by the heat radiation member 30, thus allowing the temperature of the stage 4 being a heating target to be sufficiently raised.

In the preheating process of the present embodiment, the internal temperature of the chamber 3 is raised from a room temperature to a target temperature of approximately 200 °C. Meanwhile, the temperature of the front end portion 10a of the fabrication head 10 heated by the head heating unit 12 increases to a temperature of approximately 400 °C. In the present embodiment, heat of the head heating unit 12 at such a high temperature is utilized, thus greatly contributing to a reduction in the time of the preheating process. Similarly, the temperature of the stage 4 heated by the stage heating unit 5 increases to a temperature of approximately 280 °C. In the present embodiment, heat of the stage heating unit 5 at such a high temperature is utilized, thus greatly contributing to a reduction in the time of the preheating process. In addition, for the present embodiment, the preheating process is performed using heat of both the head heating unit 12 and the stage heating unit 5, thus allowing a significant reduction in the time of the preheating process.

Note that, in the present embodiment, the head heating unit 12 to heat the filaments being fabrication materials or the support material and the stage heating unit 5 to heat the stage 4 are used as the heat generators utilized for the preheating process of the interior of the chamber 3. However, in some embodiments, one of the head heating unit 12 and the stage heating unit 5 may be used as the heat generator.

The heat generator utilized for the preheating process of the interior of the chamber 3 is not limited to the head heating unit 12 and the stage heating unit 5. Any suitable heat generator may be similarly available if the heat generator can generate heat to heat a heating target in the fabrication process. In the above-described embodiment, the example is described in which a three-dimensional object is fabricated according to fused deposition modeling (FDM). In an example in which a three-dimensional object is fabricated according to another fabrication method, any suitable heat generator used for the fabrication method is available.

To further reduce the time of the preheating process of the interior of the chamber 3, the controller 100 may preferably control the heat generation amount of the head heating unit 12 and the stage heating unit 5 to be greater in the preheating process than in the fabrication process, by, for example, setting the energization amount to the head heating unit 12 and the stage heating unit 5 to be greater in the preheating process than in the fabrication process.

The above-described embodiments are limited examples, and the present disclosure includes, for example, the following aspects having advantageous effects.

### Aspect A

A three-dimensional fabricating apparatus, such as the three-dimensional fabricating apparatus 1, includes: a processing-space heater, such as the chamber heater 7, to heat a processing space, such as the interior of the chamber 3, to a target temperature; a fabrication unit, such as the fabrication head 10, to fabricate a three-dimensional object in the processing space heated to the target temperature; a heat generator, such as the head heating unit 12 and the stage heating unit 5, to generate heat to heat a heating target, such as the fabrication materials, the support material, and the stage 4, in a fabrication process of fabricating the three-dimensional object with the fabrication unit; a heat radiator, such as to radiate heat in the processing space; and a heat-transmission switching unit, such as the controller 100, the Y-axis drive assembly 22, and the Z-axis drive assembly 23, configured to cause the heat generated in the heat generator to be transmitted to the heat radiator in a preheating process of heating the processing space to the target temperature. The heat-transmission switching unit is configured to switch transmission of the heat from the heat generator to the heat radiator so that a transmission efficiency in transmitting the heat generated in the heat generator to the heat radiator is lower in the fabrication process than in the preheating process. In Aspect A, the heat generator to heat a heating target in the fabrication process also generates heat in the preheating process and transmit the heat to the heat radiator to heat the interior of the processing space. Such a configuration can increase the speed of raising the temperature of the processing space than a configuration in which the processing space is heated by only a processing space heater, thus allowing a reduction in the time for the preheating process. Here, if, in the fabrication process, heat of the heat generator is also transmitted to the heat radiator and used to heat the processing space, the temperature of the heating target to be heated by the heat generator might not be sufficiently raised in the fabrication process. In Aspect A, the heat-transmission switching unit causes the transmission efficiency in transmitting the heat generated in the heat generator to the heat radiator to be lower in the fabrication process than in the preheating process, thus preventing insufficient rising of the temperature of the heating target in the fabrication process.

### Aspect B

In the above-described Aspect A, the heat radiator includes a heat radiation member, such as the heat radiation member 30, disposed in the processing space, and the heat-transmission switching unit moves the heat generator to a heat transmission position, such as the home position or the lowest point, to transmit the heat generated in the heat generator to the heat radiation member in the preheating process and moves the heat generator to a non-heat transmission position to prevent the heat generated in the heat generator from being transmitted to the heat radiation member in the fabrication process, to switch the transmission of the heat from the heat generator to the heat radiator. With such a configuration, the transmission of the heat from the heat generator to the heat radiator can be switched by movement of the heat generator, thus allowing a simple configuration of the heat-transmission switching unit.

### Aspect C

In the above-described Aspect B, a plurality of heat radiation members, such as the heat radiation member 30, is disposed in the processing space. For such a configuration, heat of the heat generator is transmitted to the plurality of heat dissipation members in the processing space and used to heat the processing space. Accordingly, such a configuration can more efficiently heat the interior of the processing space than a configuration in which heat of the heat generator is transmitted to a single heat radiation member.

### Aspect D

In the above-described Aspect B or Aspect C, the three-dimensional fabricating apparatus includes a fabrication material heater, such as the head heating unit 12, to heat a fabrication material, such as filaments, constituting the three-dimensional object in the fabrication process; and a movement assembly, such as the X-axis drive assembly 21 and the Y-axis drive assembly 22, to move the fabrication unit and the fabrication material heater together. The heat generator includes the fabrication material heater. The heat-transmission switching unit switches the transmission of the heat from the heat generator to the heat radiator with the movement assembly. With such a configuration, the transmission of the heat from the heat generator to the heat radiator can be switched by the movement assembly to move the fabrication unit, thus allowing a more simple configuration of the heat-transmission switching unit.

### Aspect E

In the above-described Aspect D, the fabrication unit sequentially laminates layered fabrication structures with the fabrication material heated by the fabrication material heater to fabricate the three-dimensional object. With such a configuration, when a three-dimensional object is fabricated according to fused deposition modeling (FDM) including a preheating process of heating the interior of the processing space, the time for the preheating process can be shortened.

### Aspect F

In any one of the above-described Aspects A to E, the three-dimensional fabricating apparatus includes a mount table, such as the stage 4, on which the three-dimensional object is mounted; and a mount-table heater, such as the stage heating unit 5, to heat the mount table in the fabrication process. The heat generator includes the mount-table heater. Such a configuration allows the preheating process of the processing space to be performed utilizing heat generated in the mount-table heater.

### Aspect G

In the above-described Aspect F, the three-dimensional fabricating apparatus includes a mount-table movement assembly, such as the Z-axis drive assembly 23, to move the mount table. The heat-transmission switching unit switches the transmission of the heat from the heat generator to the heat radiator with the mount-table movement assembly. With such a configuration, the transmission of the heat from the heat generator to the heat radiator can be switched by the mount-table movement assembly to move the mount table, thus allowing a more simple configuration of the heat-transmission switching unit.

### Aspect H

In any one of the above-described Aspects A to G, the three-dimensional fabricating apparatus includes a heat generation controller, such as the controller 100, to control the heat generator so that an amount of the heat generated in the heat generator is greater in the preheating process than in the fabrication process.

## Claims

1. A three-dimensional fabricating apparatus (1) comprising:
a processing-space heater (7) to heat a processing space to a target temperature;
a fabrication unit (10) to fabricate a three-dimensional object in the processing space heated to the target temperature;
a heat generator (12) to generate heat to heat a heating target in a fabrication process of fabricating the three-dimensional object with the fabrication unit (10);
a heat radiator (30) to radiate heat in the processing space; and
a heat-transmission switching unit (100, 22, 23) to cause the heat generated in the heat generator (12) to be transmitted to the heat radiator (30) in a preheating process of heating the processing space to the target temperature,
the heat-transmission switching unit (100, 22, 23) to switch transmission of the heat from the heat generator (12) to the heat radiator (30) so that a transmission efficiency in transmitting the heat generated in the heat generator (12) to the heat radiator (30) is lower in the fabrication process than in the preheating process.

2. The three-dimensional fabricating apparatus (1) according to claim 1,
wherein the heat radiator (30) includes a heat radiation member (30) disposed in the processing space, and
wherein the heat-transmission switching unit (100, 22, 23) moves the heat generator (12) to a heat transmission position to transmit the heat generated in the heat generator (12) to the heat radiation member (30) in the preheating process and moves the heat generator (12) to a non-heat transmission position to prevent the heat generated in the heat generator (12) from being transmitted to the heat radiation member (30) in the fabrication process, to switch the transmission of the heat from the heat generator (12) to the heat radiator (30).

3. The three-dimensional fabricating apparatus (1) according to claim 2,
wherein the heat radiator (30) includes at least another heat radiation member (30) disposed in the processing space.

4. The three-dimensional fabricating apparatus (1) according to claim 2 or 3, further comprising:
a fabrication material heater (12) to heat a fabrication material constituting the three-dimensional object in the fabrication process; and
a movement assembly (21, 22, 23) to move the fabrication unit (10) and the fabrication material heater (12) together,
wherein the heat generator (12) includes the fabrication material heater (12), and
wherein the heat-transmission switching unit (100, 22, 23) switches the transmission of the heat from the heat generator (12) to the heat radiator (30) with the movement assembly (21, 22, 23).

5. The three-dimensional fabricating apparatus (1) according to claim 4,
wherein the fabrication unit (10) sequentially laminates layered fabrication structures with the fabrication material heated by the fabrication material heater (12) to fabricate the three-dimensional object.

6. The three-dimensional fabricating apparatus (1) according to any one of claims 1 through 5, further comprising:
a mount table (4) on which the three-dimensional object is mounted; and
a mount-table heater (5) to heat the mount table (4) in the fabrication process,
wherein the heat generator (12) includes the mount-table heater (5).

7. The three-dimensional fabricating apparatus (1) according to claim 6, further comprising:
a mount-table movement assembly (23) to move the mount table (4),
wherein the heat-transmission switching unit (100, 22, 23) switches the transmission of the heat from the heat generator (12) to the heat radiator (30) with the mount-table movement assembly (23).

8. The three-dimensional fabricating apparatus (1) according to any one of claims 1 through 7, further comprising:
a heat generation controller (100, 22, 23) to control the heat generator (12) so that an amount of the heat generated in the heat generator (12) is greater in the preheating process than in the fabrication process.
